# EUROPEAN PATENT APPLICATION

(11) **EP 2 916 559 A1**
(43) Date of publication of application: **09.09.2015**
(21) Application number: 13851214.0
(22) Date of filing: 02.11.2013
(51) Int. Cl.: H04N 21/6334, H04N 21/437

(54) **METHOD AND DEVICE FOR PLAYING CONTENT**

(30) Priority: 02.11.2012 US 201261721509 P; 11.12.2012 US 201261735565 P
(71) Applicant: LG Electronics Inc., Yeongdeungpo-gu Seoul 150-721 (KR)
(72) Inventor: LEE, Minsoo, Seoul 137-724 (KR); HWANG, Soojin, Seoul 137-724 (KR); SUH, Jongyeul, Seoul 137-724 (KR); CHO, Sunghyun, Seoul 137-724 (KR); LEE, Hyeonjae, Seoul 137-724 (KR); KIM, Jinpil, Seoul 137-724 (KR); LEE, Jaekoo, Seoul 137-724 (KR)
(74) Representative: Frenkel, Matthias Alexander
(86) International application number: PCT/KR2013/009870
(87) International publication number: WO 2014/069949

(57) **Abstract**

There is provided a method of playing a content stored in a storage device which is connectable, including: detecting whether the storage device is connected; receiving certification information from the detected storage device; transmitting, to a server, the certification information; receiving, from the server, an encrypted media file and a certification list based on the certification information, wherein the certification list is used for authenticating eligibility of at least one of a player, the storage device, and the server; storing the encrypted media file to the storage device and updating the certification list; and playing the encrypted media file based on the updated certification list.

## Description

### [Technical Field]

The present invention relates to a method and device for playing content. More particularly, the present invention relates to a method and device for playing content, which is stored in a storage device, from a device constituting a network service, or playing content transmitted through an external device or an Internet server.

### [Background Art]

Recently, as smartphones or smart TVs adopt a technique of ultra high definition (UHD), beyond full high definition (HD), various content items of high resolution and ultra high definition are expected to be encountered in various fields such as movie, concerts, and sports, as well as broadcasting.

However, if existing players are unable to play various content items of high resolution and ultra high resolution, it may be impossible for users to use such content items. Thus, players are to play content items of high resolution or ultra high resolution, and a scheme enabling an existing player to play such content items is required.

Also, in order to properly distribute and use content items of high resolution, a scheme of preventing duplication may also be required.

### [Disclosure]

### [Technical Problem]

An aspect of the present invention defines a system architecture including a configuration of a device capable of playing content stored in a storage device, a configuration of a network, a transmission protocol between a server and a device, and the like.

An aspect of the present invention also provides a protocol and a system architecture enabling a device unable to play content stored in a storage device to search or download replaceable content from an external server.

An aspect of the present invention also provides a protocol and a system architecture enabling a player (or a playback device) that can be connected to a TV tuner available to store a UHD broadcast program to search or download replaceable content.

An aspect of the present invention also defines a device profile and a content profile for allowing for selection of content eligible to be played when a player is available to be connected to an Internet server.

### [Technical Solution]

According to an aspect of the present invention, there is provided a system architecture including a configuration of a device capable of playing secure high definition content, a configuration of a network, a transmission protocol between a server and a device, and the like.

According to another aspect of the present invention, there are also provided a protocol and a system architecture enabling a device unable to play content stored in a storage device to search or download replaceable content from an external server.

According to another aspect of the present invention, there are also provided a protocol and a system architecture enabling a player that can be connected to a TV tuner available to store a UHD broadcast program to search or download replaceable content.

According to another aspect of the present invention, there are also provided a device profile and a content profile for allowing for selection of content eligible to be played when a player is available to be connected to an Internet server.

### [Advantageous Effects]

Even though a user device is connected to a storage device storing content of which a format or a profile is not supported by the user device, a user may automatically search and/or download a substitute content file that can be played in the user device through the Internet, thereby playing high definition or ultra-high definition (UHD) content.

Thus, when content stored in a storage device cannot be played in the user device, the user may not need to perform a cumbersome procedure such as directly accessing a download server to search for content or selecting and downloading searched content, and the like.

Also, even though a player has poor performance, the player may search for replaceable content and play the same, whereby the user may be provided with various content services.

### [Description of Drawings]

FIG. 1 is a view illustrating a system for using a secure high definition content service according to an embodiment to which the present invention is applied.
FIG. 2 is a schematic internal block diagram of a playback device for playing secure high definition content, as an embodiment to which the present invention is applied.
FIG. 3 is a schematic internal block diagram of a storage device for storing secure high definition content, as an embodiment to which the present invention is applied.
FIG. 4 is a flow chart illustrating a process of playing secure high definition content stored in a storage device, as an embodiment to which the present invention is applied.
FIG. 5 is a flow chart illustrating a process of playing secure high definition content stored in a storage device, as an embodiment to which the present invention is applied.
FIG. 6 is a flow chart illustrating a process of copying secure high definition content between storage devices, as an embodiment to which the present invention is applied.
FIG. 7 is a flow chart illustrating a process of moving secure high definition content between storage devices, as an embodiment to which the present invention is applied.
FIG. 8 is a view illustrating profile information of secure high definition content, as an embodiment to which the present invention is applied.
FIG. 9 is a view illustrating a process of downloading secure high definition content stored in a disk to a universal serial bus (USB) device through a Kiosk, as an embodiment to which the present invention is applied.
FIG. 10 is a view illustrating a process of downloading secure high definition content stored in a disk to a universal serial bus (USB) device through a disk player, as an embodiment to which the present invention is applied.
FIG. 11 is a flow chart illustrating a process of playing secure high definition content stored in a storage device through a specific application program, as an embodiment to which the present invention is applied.
FIG. 12 is a flow chart illustrating a process of downloading a specific application program when secure high definition content stored in a storage device is not available to be played, as an embodiment to which the present invention is applied.
FIGS. 13 and 14 are flow charts illustrating a process of playing secure high definition content, which is being played in a first playback device, by a second playback device, as embodiments to which the present invention is applied.
FIG. 15 is a view illustrating a process of outputting advertisement information while secure high definition content is being played, as an embodiment to which the present invention is applied.
FIG. 16 is a view illustrating meta data included in advertisement information output while secure high definition content is being played, as an embodiment to which the present invention is applied.
FIGS. 17 and 18 are flow charts illustrating a process of playing secure high definition content, which is being played in a vehicle AV system, by other playback device, as embodiments to which the present invention is applied.
FIG. 19 is a flow chart illustrating a process of downloading other content profile when secure high definition content stored in a storage device cannot be played, as an embodiment to which the present invention is applied.

### [Best Mode]

According to an aspect of the present invention, there is provided a method of playing a content stored in a storage device which is connectable, the method comprising: detecting whether the storage device is connected; receiving certification information from the detected storage device; transmitting, to a server, the certification information; receiving, from the server, an encrypted media file and a certification list based on the certification information, wherein the certification list is used for authenticating eligibility of at least one of a player, the storage device, and the server; storing the encrypted media file to the storage device and updating the certification list; and playing the encrypted media file based on the updated certification list.

In the present invention, the encrypted media file may include content level information, and the content level information may represent categorized content attribute information.

In the present invention, the certification list may be updated by synchronizing the certification list with a previous certification list, and the previous certification list is pre-stored in the storage device.

In the present invention, the certification list may be stored in a security area of the storage device.

In the present invention, the encrypted media file is played based on a specific application installed on the player.

According to an aspect of the present invention, there is also provided a method of downloading a secure high definition content, including: receiving, from a player, a signal for requesting certification information of a storage device; transmitting, to the player, the certification information of the storage device; receiving, from a server, an encrypted media file and a certification list based on the certification information, wherein the certification list is used for authenticating eligibility of at least one of the player, the storage device and the server; storing the encrypted media file to the storage device; and updating the certification list.

According to an aspect of the present invention, there is also provided a device of playing a content stored in a storage device which is connectable, the device comprising: a controller configured to detect whether the storage device is connected, receive certification information from the detected storage device, transmit the certification information to a server, receive an encrypted media file and a certification list from a server based on the certification information, store the encrypted media file to the storage device, and update the certification list; a decoder configured to decode the encrypted media file based on the updated certification list; and a display configured to output the decoded media file, wherein the certification list is used for authenticating eligibility of at least one of a player, the storage device and the server.

According to an aspect of the present invention, there is also provided a device of downloading a secure high-quality content, including: a secure information management unit configured to receive a signal for requesting certification information of a storage device from a player, transmit the certification information of the storage device to the player, and receive an encrypted media file and a certification list from a server based on the certification information; a data memory configured to store the encrypted media file; and an updating unit configured to update the certification list, wherein the certification list is used for authenticating eligibility of at least one of the player, the storage device and the server.

According to an aspect of the present invention, there is also provided a car multimedia system of playing a content stored in a storage device which is connectable, including: a digital interface configured to detect whether the storage device is connected; a AV system unit configured to receive certification information from the detected storage device, transmit the certification information to a server, receive an encrypted media file and a certification list from a server based on the certification information, store the encrypted media file to the storage device, and update the certification list; and a display unit configured to play the encrypted media file based on the updated certification list, wherein the certification list is used for authenticating eligibility of at least one of a player, the storage device and the server.

### [Mode for Invention]

Hereinafter, elements and actions of embodiments of the present invention will be described below in more detail with reference to the accompanying drawings. However, the elements and actions illustrated in the drawings and described with reference thereto are set forth only as examples and do not limit the spirit of the invention or its key elements and actions.

The terms used in this specification were selected to include current, widely-used, general terms. However, in certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present invention.

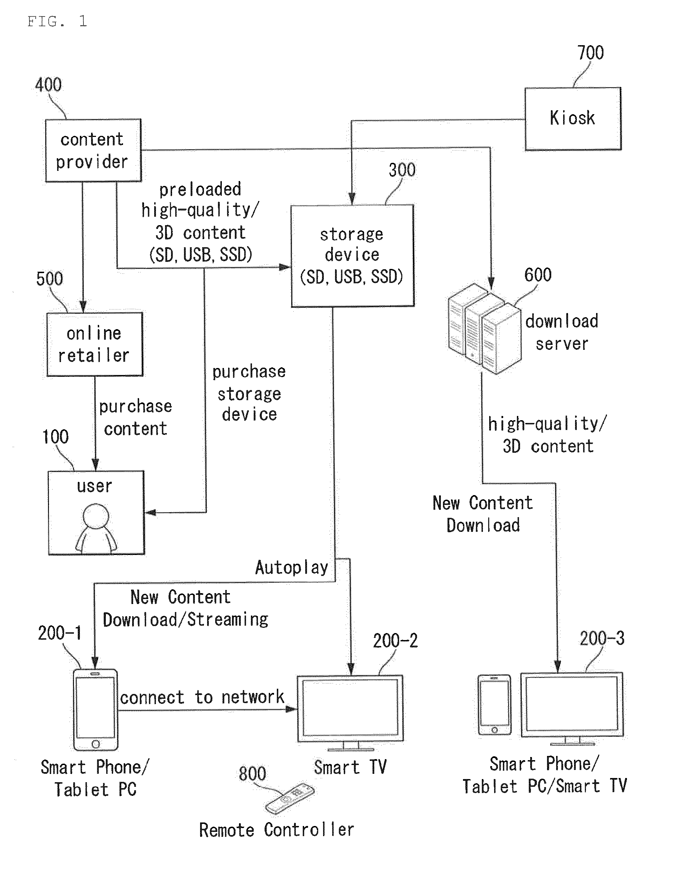

FIG. 1 is a view illustrating a system for using a secure high definition content service according to an embodiment to which the present invention is applied.

A system to which the present invention is applied may include a user 100 who purchases secure high definition content and uses the same, playback devices (or players) 200-1, 200-2, and 200-3 capable of playing the content, a storage device 300 in which the content has been stored or in which the content is eligible to be stored, a content provider 400 providing the content, an online retailer 500 and an electronic Kiosk 700 receiving the content and providing the received content to the user, and a download server 600 storing the content to allow the content to be downloaded. Also, the system may further include an external interface 800, for example, a remote controller, for controlling an operation of the playback devices.

In an embodiment to which the present invention is applied, the user who wants to use a secure high definition content service may use the service through various methods.

In a first example, the user 100 may use the service by purchasing a storage device in which the secure high definition content has already been stored. For example, the content provider 400 may preload content, which is intended to be provided, to a portable hard drive such as a hard disk drive (HDD) or a solid state drive (SSD) or a flash memory product such as a universal serial bus (USB) flash drive or a secure digital (SD) card, and purchase the same, and the user may use the service by purchasing the storage device storing desired content.

In a second example, the user 100 may use the service by purchasing content from a retailer 500 providing the secure high definition content service. For example, the retailer 500 may receive content from the content provider 400 and provide the content service online or offline, and the user 100 may use the service by properly purchasing content from the retailer 500. Also, the user 100 may use the service by purchasing the storage device from the retailer 500.

In a third example, the user may use the service by purchasing content from the electronic Kiosk 700 providing the secure high definition content service. For example, the user 100 may plug in the storage device 300 capable of storing secure high definition content to the electronic Kiosk 700, and download the content to the storage device 300 through a required certification procedure and purchase procedure. Here, the electronic Kiosk 700 may be connected to the content provider 400 or a content server of the retailer 500 through wired/wireless communication. For example, the content server may be the download server 600. In a fourth example, the user 100 may use the service by directly accessing the download server 600 of the content provider 400 and purchasing content. The download server may be operated by the content provider 400 online.

In a fifth example, the user 100 may play the content by inserting the storage device 300 storing secure high definition content into the playback device 200-1. For example, the playback device 200-1 may be any device which may be able to play multimedia content, such as a smartphone or a smart TV.

In a sixth example, the user 100 may insert the storage device in which the secure high definition content has been stored or is eligible to be stored into the first playback device 200-1, and play the content in the second playback device 200-2. Here, the first playback device 200-1 and the second playback device 200-2 may be connected by a network. Also, content may be played in the second playback device 200-2 through an external interface (for example, the remote controller 800, or the like) or a user interface (for example, a touchscreen, a voice, a gesture, and the like).

In a seventh example, the user 100 may insert the storage device 300 capable of storing secure high definition content into the playback device 200-3 and download the content from an external content server to thus play the content. Here, the content may be stored in the storage device 300, and the external content server may be a content server of the content provider 400 or the retailer 500.

In an eighth example, the user may insert the storage device 300 in which the secure high definition content has been stored or is eligible to be stored into a car audio and visual (AV) system and play the content in a separate electronic device. Here, the car AV system and the separate electronic device may transmit and receive data through wired/wireless communication.

In order to play the secure high definition content, a specific application may be required. The specific application mentioned in this disclosure may refer to a software program for playing secure high definition content. For example, the specific application may refer to a software program capable of playing copy-prevented high definition content which has been stored or is eligible to be stored in a portable hard drive such as an HDD or SSD or in a flash memory product such as a USB flash drive or an SD card.

In particular, in the case of a playback device unable to reproduce the secure high definition content, installation of the specific application may be essential to play the content.

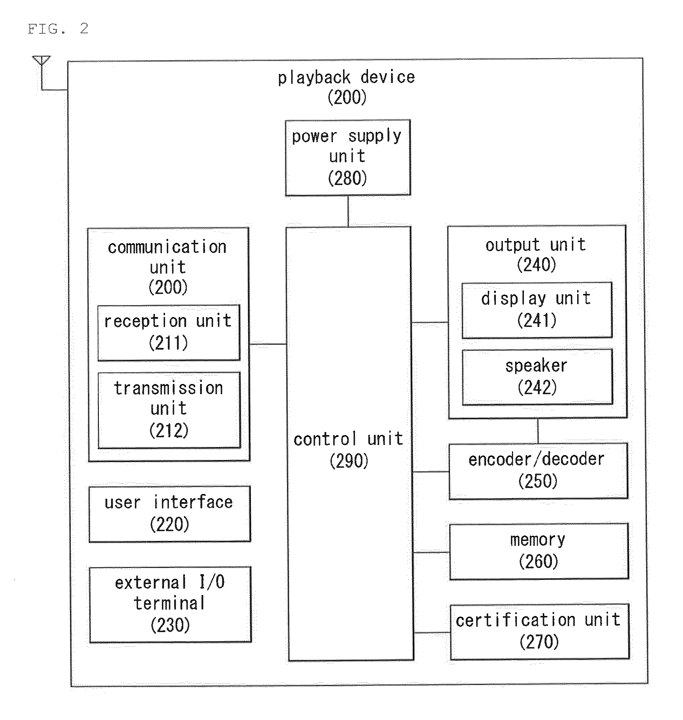

FIG. 2 is a schematic internal block diagram of a playback device for playing secure high definition content, as an embodiment to which the present invention is applied.

The playback device 200 may include a communication unit 210, a user interface 220, an external input/output terminal 230, an output unit 240, an encoder/decoder 250, a memory 260, a certification unit 270, a power supply unit 280, and a control unit 290. The communication unit 210 may include a reception unit 211 and a transmission unit 212, and the output unit 240 may include a display unit 241 and a speaker 242.

The communication unit 210 may include one or more modules allowing for wired/wireless communication between the playback device 200 and the content server or between the playback device 200 and other electronic device connected by a network. For example, the reception unit 211 may receive a signal transmitted from the content server or the other electronic device through a channel. Here, the signal may include secure high definition content data. The transmission unit 212 may transmit information required for downloading or streaming the secure high definition content data to the content server or the other electronic device. For example, the information required for downloading or streaming the secure high definition content data may include at least one among identification information, license information, level information, and certification information of the playback device and/or the storage device.

The user interface 220 serves to transfer input information from the user to the playback device 200. For example, in order to control playing of the secure high definition content, in order to input information required for purchasing or certification procedure, or in order to perform setting for playing in other electronic device, the user interface 220 may be used. The user interface 220 may include a touchscreen unit (not shown), a voice recognition unit (not shown), or a gesture recognition unit (not shown), and may be a separate external device such as a remote controller.

The external input/output terminal 230 may serve as a passage with an external device connected to the playback device 200. The external input/output terminal 230 may receive data or power from an external device and transfer the same to each component of the playback device 200, or transmit data within the playback device 200 to an external device. For example, the external input/output terminal 230 may be a connection terminal for connection with the storage device 300 and may include at least one among a USB port, a HDMI port, a wired/wireless headset port, an external charger port, a wired/wireless data port, a memory card port, an audio input/output (I/O) port, a video I/O port, and an earphone port. The storage device 300 and the playback device 200 may communicate through the external input/output terminal 230.

The output unit 240, serving to generate an output related to sight and hearing, may include the display unit 241 and the speaker 242.

The display unit 241 may output visual information processed in the playback device 200. For example, the display unit 241 may output secure high definition content, output information indicating that the storage device 300 has been plugged in, or output information required for a process of purchasing or authenticating content. The display unit 241 may include at least one among a liquid crystal display (LCD), a thin film transistor liquid crystal display (TFT LCD), an organic light emitting diode (OLED), a flexible display, and a 3D display.

The speaker 242 may output acoustic information processed in the playback device 200. For example, the speaker 242 may output audio information of content or information required for playing the content, as voice information.

The encoder/decoder 250 may be used to perform decoding to display the secure high definition content or may be used to encode an image signal or an audio signal input from the playback device 200.

The memory 260 may store a program for operation of the control unit 290 or may temporarily store input/output data. For example, the memory 260 may store a specific application for playing the secure high definition content or may store identification information, profile information, level information, and certification information of the playback device 200 and meta data of the content.

The memory 260 may include at least one type of storage mediums among a flash memory type, a hard disk type, a multimedia card micro-type, a card-type memory (e.g., an SD or XD memory, etc.), a random access memory (RAM), a static random access memory (SRAM), a read only memory (ROM), an electrically erasable programmable read only memory (EEPROM), a programmable read only memory (PROM), a magnetic memory, a magnetic disk, and an optical disk. Also, the playback device 200 may operate in relation to a Web storage performing a storage function of the memory 260 on the Internet.

The certification unit 270 may decrypt encrypted content to play the content. Here, the certification unit 270 may perform a response checking process regarding key information, and may transmit and receive certification information of a storage device or a playback device.

The power supply unit 280 may receive external power and/or internal power and supply power required for operation of each component under the control of the control unit 290.

The control unit 290 controls a general operation of the playback device 200. For example, the control unit 290 may control an operation of detecting whether the storage device 300 is connected, receiving certification information from the detected storage device, or transmitting the received certification information to a server. Also, the control unit 290 may control an operation of receiving an encrypted media file and a certification list (or a certificate revision list (CRL)) from the server on the basis of the certification information, storing the encrypted media file to the storage device, update the certification list, or playing the encrypted media file on the basis of the updated certification list.

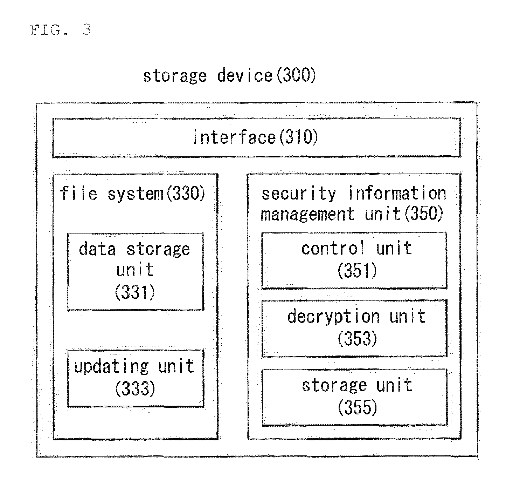

FIG. 3 is a schematic internal block diagram of a storage device for storing secure high definition content, as an embodiment to which the present invention is applied.

The storage device 300 to which the present invention is applied may include an interface 310, a file system 330, and a security information management unit 350. The file system 330 may include a data storage unit 331 and an updating unit 333, and the security information management unit 350 may include a control unit 351, a decryption unit 353, and a storage unit 355.

The interface 310 serves as a passage with an external device connected to the storage device 300. For example, when the storage device 300 is plugged in to a playback device, the storage device 300 may receive data from the playback device or transmit internal data of the storage device 300 to the playback device through the interface 310.

The data storage unit 331 may store license information, password information, and the latest certification list required for playing the encrypted multimedia content data.

The updating unit 333 may receive the latest certification list and synchronize the received certification list with previously stored certification list, thus updating the certification list. Here, the latest certification list may be received from the playback device or an external server.

The security information management unit 350 may be connected to a license server through the playback device, and may perform a handshake process with the license server regarding the license information, the password information, and the certification list required for playing content. The control unit 351 of the security information management unit 350 may control the forgoing process, and the decryption unit 353 may decrypt the license information or the password information. The storage unit 355 may store the license information and/or the password information, and the storage unit 355 may be a security region within the storage device 300.

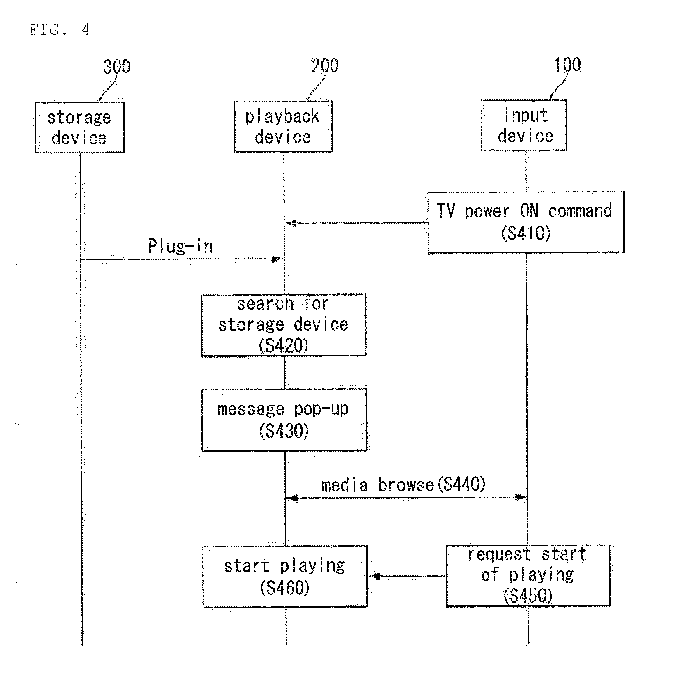

FIG. 4 is a flow chart illustrating a process of playing secure high definition content stored in a storage device, as an embodiment to which the present invention is applied.

This embodiment shows a process of playing secure high definition content when the storage device 300 storing the secure high definition content is plugged in to the playback device 200.

First, when power of the playback device 200 is turned on through the input device 100 (S410) and the storage device 300 is plugged in to the playback device 200, the playback device 200 may automatically search for the plugged-in device, and identify the storage device 300 according to the search result (S420). Here, the input device 100 may be a separate external device such as a remote controller, and may include a touchscreen, a voice recognition unit, or a gesture recognition unit such as a user interface.

When the playback unit identifies the plugged-in storage device 300, the playback device 200 may display notification information indicating that the storage device 300 has been plugged in, and here, the notification information may be output as a pop-up message (S430). The playback device 200 displays a content list included in the storage device 300, and content to be played is selected through communication (media browse) with the input device 100 (S440).

After content to be played is selected, the playback device 200 plays the selected content according to a play start request (S450, S460).

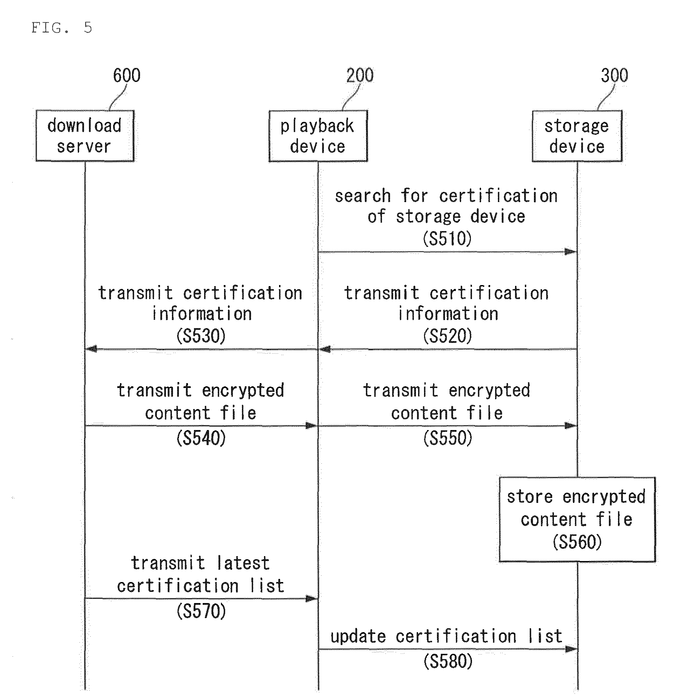

FIG. 5 is a flow chart illustrating a process of playing secure high definition content stored in a storage device, as an embodiment to which the present invention is applied.

In order to play secure high definition content, the playback device 200 may use at least one among a certification list, password information, device identification information, device certification information, storage device certification information, and storage device identification information.

First, when the storage device 300 storing the secure high definition content is plugged in to the playback device 200, the playback device 200 may request device certification information of the storage device 300 from the storage device 300 (S510). When the request for device certification information is received from playback device 200, the storage device 300 transmits the device certification information to the download server 600 (S530). Here, the download server 600 refers to a server storing a content file, and the download server 6000 may include a certification server (not shown) for performing content certification, storage device certification, or playback device certification.

Upon relieving the device certification information from the storage device 300, the download server 600 may determine whether the device certification information is valid. For example, the download server 600 may determine whether the device certification information is valid by determining whether the device certification information is identical to any one among device certification information managed by the download server 6000. When the device certification information of the storage device 300 is not valid according to the determination result, the playback device 200 cannot play the secure high definition content.

However, when the device certification information of the storage device 300 is valid according to the determination result, the download server 600 transmits an encrypted content file to the playback device 200 (S540), and the playback device 200 transmits the encrypted content file to the storage device 300 (S550).

The storage deice 300 may store the encrypted content file, and here, the received encrypted content file may be stored in a file system of the storage device 300 (S560).

The encrypted content file may include content level information, and the content level information represents categorized content attribute information. A content file provided in the system to which the present invention is applied may be provided as a different profile according to the content level information. For example, when the content level information indicates 'Level 1', corresponding content may correspond to a standard definition (SD) profile, when the content level information indicates 'Level 2', corresponding content may correspond to a high definition (HD) profile, and when the content level information indicates 'Level 3', corresponding content may correspond to a quad high definition (QHD) profile.

Also, the playback device 200 may be provided as having various levels according to capabilities thereof. For example, when device level information indicates 'Level 1', a corresponding playback device may play content corresponding to the content level information 'Level 1', when device level information indicates 'Level 2', a corresponding playback device may play content corresponding to the content level information 'Level 1' and the content level information 'Level 2', and when device level information indicates 'Level 3', a corresponding playback device may play content corresponding to every content level information.

The download server 600 transmits the latest certification list to the playback device 200 together with transmission of the encrypted content file (S570), and the playback device 200 transmits the latest certification list to the storage device 300. The storage device 300 may update the certification list by synchronizing the received latest certification list with a previously stored certification list (S580). Here, the certification list is a list of certification information required for playing the secure high definition content. For example, the certification list may include at least one of a content title certification list, a storage device certification list, a playback device certification list, and a license certification list. The certification list may be used to authenticate eligibility of at least one of the playback device, the storage device, and the server, and may be stored in a security area of the storage device.

Since the certification list within the storage device 300 is updated, a security session may be generated between the storage device 300 and the playback device 200 or between the storage device 300 and the download server 600, and security information such as a license key may be transmitted and received through the security session.

Thus, on the basis of the updated certification list, the playback device 200 may play the encrypted content file stored in the storage device 300. The encrypted content file may be played on the basis of a specific application installed in the playback device 200.

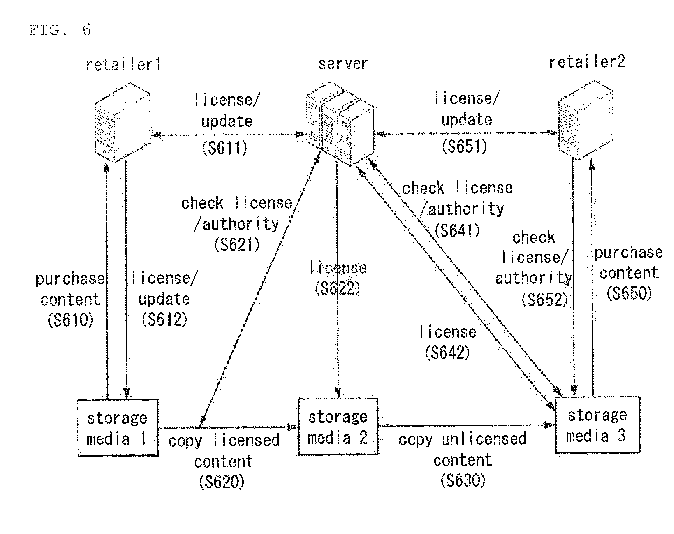

FIG. 6 is a flow chart illustrating a process of copying secure high definition content between storage devices, as an embodiment to which the present invention is applied.

The secure high definition content may be copied or moved from one storage device to other storage device. Here, the server may provide authority for valid copying or movement.

First, when a storage media 1 purchases secure high definition content from a retailer 1 (S610), the retailer 1 may report contents of the content purchase to the server. The server may provide a valid license regarding the content purchase to the retailer 1, and update a certification list stored in the server (S611). Here, the certification list may include at least one of a content title certification list, a storage device certification list, a playback device certification list, and a license certification list.

The retailer 1 may provide a valid license regarding the content purchase to the storage media 1, and update the certification list stored in the retailer 1 (S612).

In another embodiment, in a case in which content properly purchased from the storage media 1 is intended to be copied to a storage media 2 (S620), the server may determine whether the storage media 2 has authority to play the content or whether the content may be copied (S621). When the storage media 2 has authority to play the content or the content may be copied according to the determination, copying of the content by the storage media 2 may be performed and the server may provide license information for playing the content to the storage media 2 (S622). Here, the storage media 2 may need to have capability of playing the content.

In another embodiment, when the content is intended to be copied invalidly (unlicensed copy) from the storage media 2 to a storage media 3 (S620), only a data file of the content may be copied from the storage media 2 to the storage media 3 and an authentication procedure through the server is not performed (S630).

In another embodiment, when the storage media 3 intends to play the content, the storage media 3 may request authority to play the content from the server (S641), and accordingly, the server may provide authority to play the content to the storage media 3 (S642).

However, when the authority to play the content expires, the storage media 3 should newly purchase content from the retailer 2 (S650). When purchasing new content through the retailer 2 is completed, the retailer 2 may transmit the purchase information to the server and the server may update the certification list stored in the server on the basis of the new purchase information (S651). The retailer 2 may provide a valid license regarding the content purchase to the storage media 3, and update a certification list stored in the retailer 2 (S652).

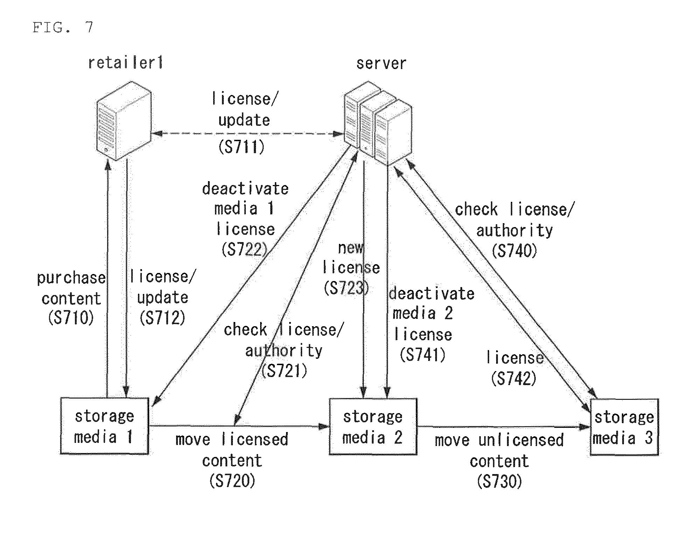

FIG. 7 is a flow chart illustrating a process of moving secure high definition content between storage devices, as an embodiment to which the present invention is applied.

The secure high definition content may be moved from one storage device to other storage device. Here, movement may refer to transfer of a content file to a destination storage media having an activated license. The movement may be performed by a playback device having capability of playing the secure high definition content. The destination storage media may be able to store the secure high definition content. Here, the server may provide authority to move content validly.

First, when the storage media 1 purchases secure high definition content from the retailer 1 (S710), the retailer 1 may report contents of the content purchase to the server. The server may provide a valid license regarding the content purchase to the retailer 1, and update a certification list stored in the server (S711). Here, the certification list may include at least one of a content title certification list, a storage device certification list, a playback device certification list, and a license certification list.

The retailer 1 may provide a valid license regarding the content purchase to the storage media 1, and update the certification list stored in the retailer 1 (S712).

In another embodiment, in a case in which content properly purchased from the storage media 1 is intended to be moved to the storage media 2 (S720), the server may determine whether the storage media 2 has authority to move the content or whether the content may be copied (S721). When the storage media 2 has authority to move the content or the content may be moved according to the determination, movement of the content by the storage media 2 may be performed and the server may deactivate the license which has been provided to the storage media 1 (S722), and provide new license information for playing the content to the storage media 2 (S723).

In another embodiment, when the content is intended to be moved invalidly (unlicensed movement) from the storage media 2 to a storage media 3 (S740), only a data file of the content may be moved from the storage media 2 to the storage media 3 and an authentication procedure through the server is not performed.

In another embodiment, when the storage media 3 intends to play the content, the storage media 3 may request authority to play the content from the server (S740). Accordingly, the server may deactivate the license which has been provided to the storage media 2 (S741), and provide new license information for playing the content to the storage media 3 (S742).

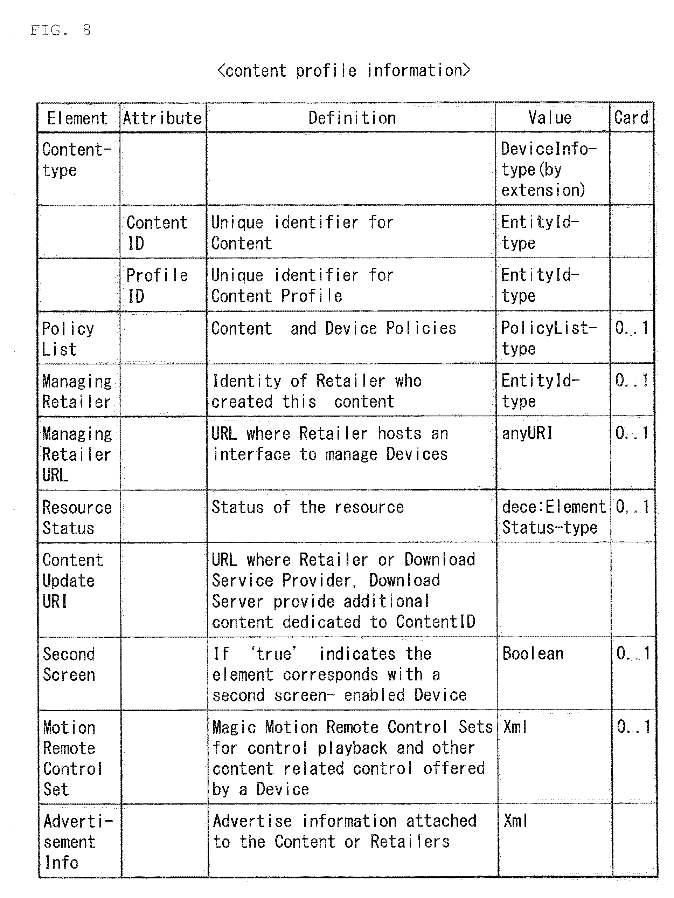

FIG. 8 is a view illustrating profile information of secure high definition content, as an embodiment to which the present invention is applied.

The content playback device to which the present invention is applied may play secure high definition content on the basis of the content profile information illustrated in FIG. 8.

For example, the content profile information may include content type information, policy list information, managing retailer information, address information of a managing retailer, resource status information, content update address information, second playback device information, external interface information, and advertisement information.

The content type information includes a content identifier for identifying content, and a content profile identifier for identifying a content profile. The policy list information represents a policy of content and a device and details thereof are shown in Table 1 below.

**[Table 1]**

| PolicyID | Definition |
|---|---|
| urn:phenix:type:policy:Enable CopyContent | Enable Copy Content to Licensed Application |
| urn:phenix:type:policy:Enable DRMID | ID of Approved DRM associated with Device |
| urn:phenix:type:policy:Enable RetailerAccess | Enable access to a Retailer who provided or created this content |
| urn:phenix:type:policy:Enable RetailerQuery | Enable Retailer to manage Devices |
| urn:phenix:type:policy:Enable HDCPOutput | Enable HDCP Output |
| urn:phenix:type:policy:Enable DTCPOutput | Enable DTCP Output |
| urn:phenix:type:policy:Enable SecondScreen | Enable Content transfer to a second screen- enabled Device |
| urn:phenix:type:policy:Enable 3DOutput | Enable 3D Output (videoFormat: "3D") |
| urn:phenix:type:policy:Enable UHDOutput | Enable UHD Output (videoFormat: "UHD-Main", "UHD-High", "UHD-SHV") |
| urn:phenix:type:policy:Enable HDMIOutput | Enable HDMI Output |

The managing retailer information represents identification information of a retailer who produced content, and the address information of the managing retailer represents location information at which the managing retailer provides a service. The resource status information represents a status of resource, the content update address information represents location information at which additional content may be provided, and the second playback information represents identification information of another playback device capable of providing content. Also, the external interface information represents remote controller information for controlling content playing or any other operation, and the advertisement information represents advertisement information provided together with content.

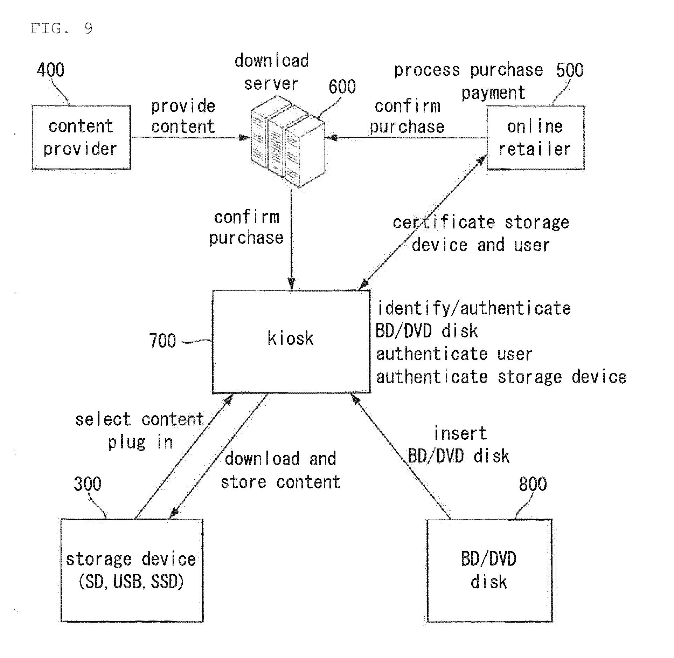

FIG. 9 is a view illustrating a process of downloading secure high definition content stored in a disk to a universal serial bus (USB) device through Kiosk, as an embodiment to which the present invention is applied.

The user may download, copy, or move secure high definition content stored in a disk to a USB device. Here, the user may download, move, or copy content by using an electronic Kiosk.

For example, referring to FIG. 9, the content provider 400 may provide secure high definition content to the download server 600, and the download server 600 may store various types of content provided from the content provider 400.

The user may insert a BD/DVD disk 800 storing secure high definition content and the storage device 300 for storing the content into the electronic Kiosk. When it is detected that the BD/DVD disk 800 and the storage device 300 are connected, the electronic Kiosk may identify the BD/DVD disk 800, the storage device 300, and at least one of content stored in the BD/DVD disk 800. Also, the electronic Kiosk may request authentication from a retailer with respect to the identified BD/DVD disk 800, the storage device 300 and/or the content. That is, the retailer may determine whether the identified BD/DVD disk 800 or the storage device 300 may be a device eligible to download content or whether the identified content is content eligible to be moved or copied.

When the identified BD/DVD disk 800 or the storage device 300 is a device eligible to download content or the identified content is content eligible to be moved or copied, the retailer may transmit authentication confirmation information to the electronic Kiosk. The user may download, move, or copy the corresponding content from the BD/DVD disk 800.

In otherwise case according to the determination result, the retailer may transmit authentication non-permission information to the electronic Kiosk and the user cannot download the corresponding content. In this case, a selection menu for purchasing the same content as the corresponding content may be displayed on the electronic Kiosk. When purchase payment processing is completed, the retailer transmits purchase confirmation information to the download server 600, and the download server 600 transmits the content to the electronic Kiosk. Also, the user may download the corresponding content to the storage device 300.

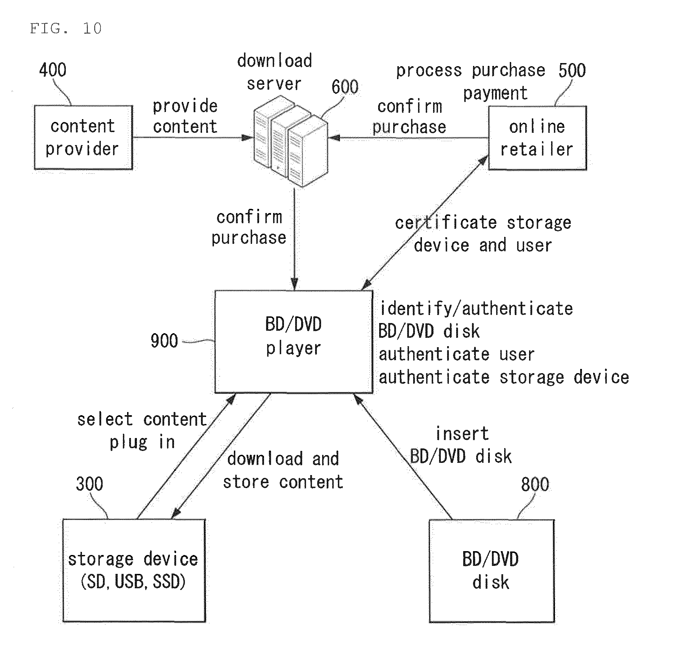

FIG. 10 is a view illustrating a process of downloading secure high definition content stored in a disk to a universal serial bus (USB) device through a disk player, as an embodiment to which the present invention is applied.

Like in FIG. 9, the user may download, move, or copy secure high definition content stored in the disk by using a disk player.

For example, referring to FIG. 10, the content provider 400 may provide secure high definition content to the download server 600, and the download server 600 may store various types of content provided from the content provider 400.

The user may insert a BD/DVD disk 800 storing secure high definition content and the storage device 300 for storing the content into the disk player. When it is detected that the BD/DVD disk 800 and the storage device 300 are connected, the disk player may identify the BD/DVD disk 800, the storage device 300, and at least one of content stored in the BD/DVD disk 800. Also, the disk player may request authentication from a retailer with respect to the identified BD/DVD disk 800, the storage device 300 and/or the content. That is, the retailer may determine whether the identified BD/DVD disk 800 or the storage device 300 may be a device eligible to download content or whether the identified content is content eligible to be moved or copied.

When the identified BD/DVD disk 800 or the storage device 300 is a device eligible to download content or the identified content is content eligible to be moved or copied, the retailer may transmit authentication confirmation information to the disk player. The user may download, move, or copy the corresponding content from the BD/DVD disk 800.

In otherwise case according to the determination result, the retailer may transmit authentication non-permission information to the disk player and the user cannot download the corresponding content. In this case, a selection menu for purchasing the same content as the corresponding content may be displayed on the disk player. When purchase payment processing is completed, the retailer transmits purchase confirmation information to the download server 600, and the download server 600 transmits the content to the disk player. Also, the user may download the corresponding content to the storage device 300.

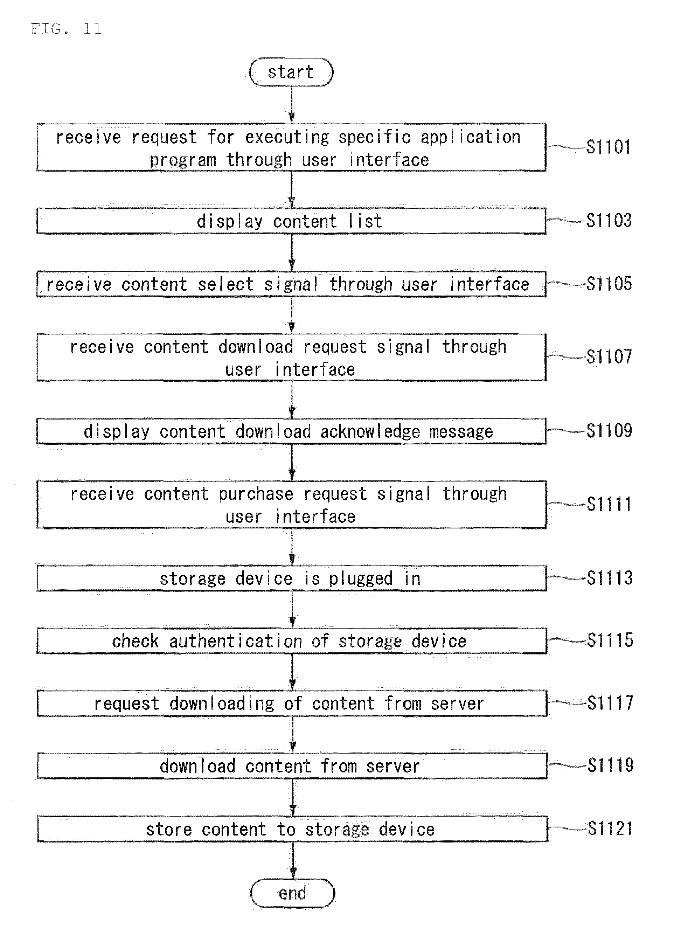

FIG. 11 is a flow chart illustrating a process of playing secure high definition content stored in a storage device through a specific application program, as an embodiment to which the present invention is applied.

First, a playback device may receive a request for executing a specific application program through a user interface (S1101). The specific application program may refer to a software program for playing secure high definition content, and if the playback device cannot play the secure high definition content, it may be essential for the playback device to install the specific application program to play the content.

When the request for executing the specific application program is received, the playback device may output a list of content items that can be played by the specific application program (S1103). When the content list is output on a screen of the playback device, the user may select content desired to be played from the content list (S1105). When a content select signal is received through a user interface (S1107), the playback device may output a message inquiring whether to perform content downloading (S1109).

When the user determines to purchase, the playback device may receive a content purchase request signal through the user interface (S1111). When the purchase request signal is received, the playback device may output a message for requesting plug-in of a storage device for storing the purchased content , and when the storage device is plugged in, the playback device may confirm the plug-in of the storage device (S1113).

The playback device may request authentication confirmation from the storage device, and the storage device may transmit an authentication confirmation message to the playback device in response thereto (S1115). After the confirmation of authentication of the storage device, the playback device may request content downloading from the content server (S1117), and content is downloaded from the content server (S1119). The downloaded content may be transmitted to the storage device and stored in the storage device (S1121).

Accordingly, the playback device may play the content stored in the storage device by using the specific application program.

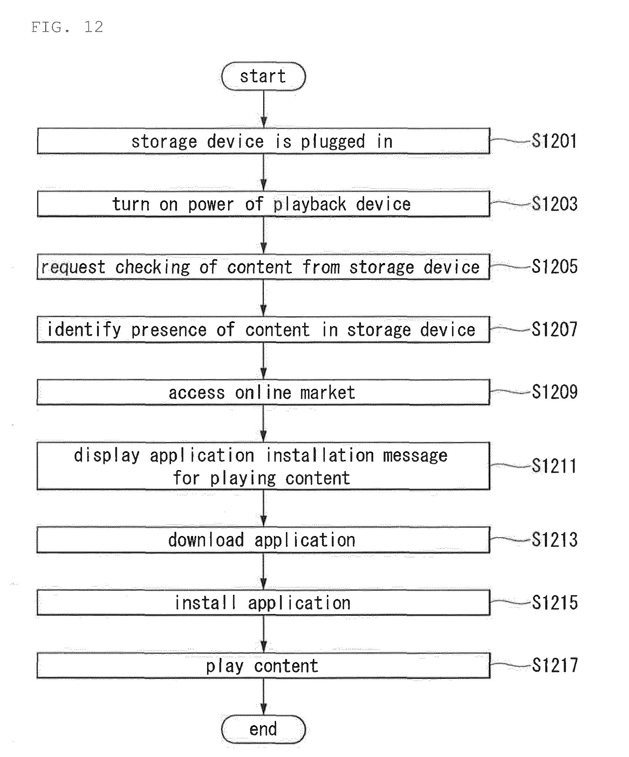

FIG. 12 is a flow chart illustrating a process of downloading a specific application program when secure high definition content stored in a storage device is not available to be played, as an embodiment to which the present invention is applied.

When the storage device is plugged in to the playback device (S1201) in a state in which power of the playback device is turned off, power of the playback device may be automatically turned on (S1203).

The playback device may automatically search for the plugged-in device, and check the storage device according to the search result. When the playback device checks the plug-in of the storage device, the playback device may request confirmation as to whether content, which has been stored, is present in the storage device (S1205).

When content, which has been stored, is present in the storage device according to the confirmation request, the playback device may output the content list (S1207). When content on the content list is selected by the user but a program for playing the content does not exist in the playback device, the playback device may access an online market (S1209). When the playback device accesses an online market, a message inquiring whether to install a specific application for playing the content may be output (S1211).

The specific application may be downloaded from the online market (S1213) and installed in the playback device according to a user selection (S1215).

The playback device may play secure high definition content stored in the storage device using the installed specific application (S1217).

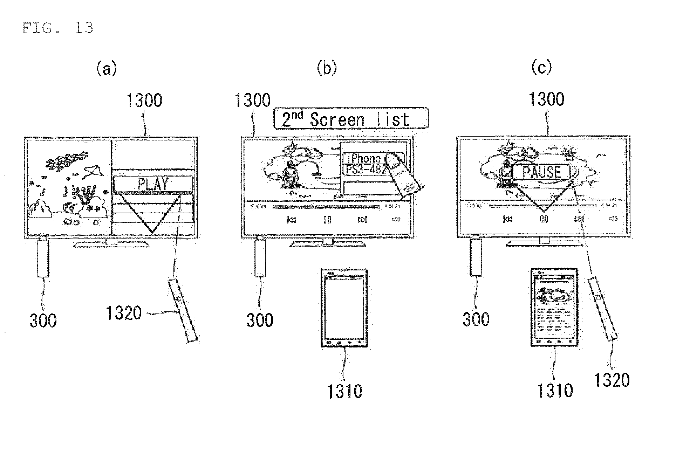

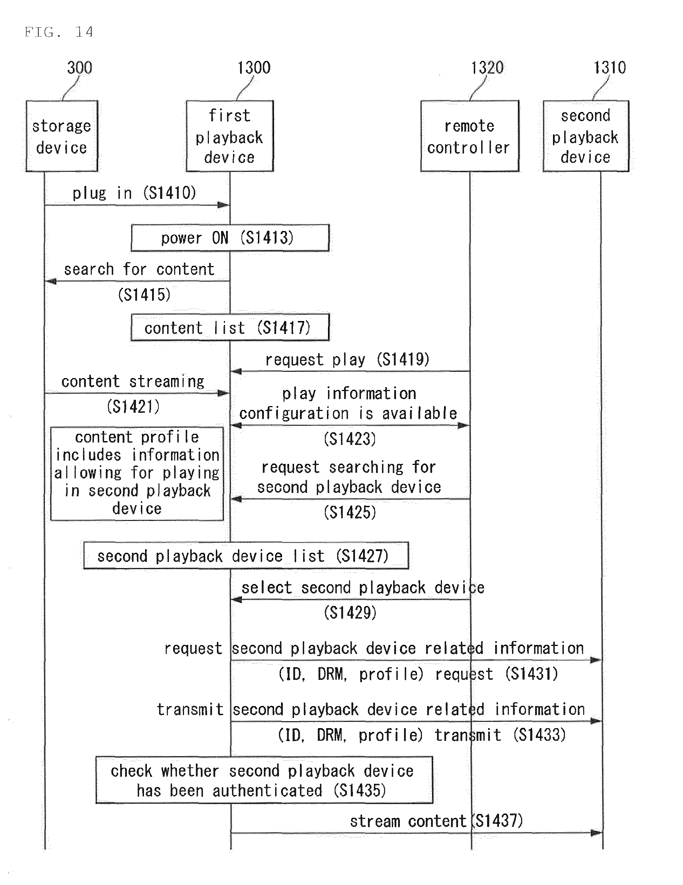

FIGS. 13 and 14 are flow charts illustrating a process of playing secure high definition content, which is being played in a first playback device, by a second playback device, as embodiments to which the present invention is applied.

Referring to FIGS. 13(a) to 13(c), a process of playing secure high definition content, which is being played in a first playback device, in a second playback device is illustrated.

First, FIG. 13(a) is a view illustrating that the user requests playing from a playback device 1300 by using an external interface, for example, by using a remote controller 1320, in a state in which the storage device 300 storing secure high definition content is plugged into the playback device.

In this respect, referring to FIG. 14, first, when the storage device 300 is plugged in to the first playback device 1300 (S1410), power of the first playback device 1300 may be automatically turned on (S1413). After the first playback device 1300 is turned on, the first playback device 1300 may search for the plugged-in device, and check the storage device 300 according to the search result. Here, when the first playback device 1300 checks the plug-in of the storage device 300, the first playback device 1300 may display notification information indicating that the storage device 300 has plugged in, and the notification information may be output as a pop-up message.

The first playback device 1300 may search for content included in the storage device 300 (S1415), and display a list of content (S1417). When content to be played is selected from the list, the first playback device 1300 streams the selected content from the storage device 300 according to a play start request of the remote controller 1320 (S1419, S1421). Here, the remote controller 1320 may set play information through communication with the first playback device 1300 (S1423).

FIG. 13(b) illustrates that, while the playback device 1300 (hereinafter, referred to as a "first playback device") is playing secure high definition content, when the user wants to play secure high definition content by other playback device (hereinafter, referred to as a "second playback device"), the first playback device 1300 is requested to output of a list of accessible second playback devices. Outputting of the list of the second playback devices may be performed by the remote controller 1320, may be performed by touching a speed button on a screen of the first playback device 1300, or may be automatically performed by a wireless communication connection configuration of the second playback device 1310.

In this respect, referring to FIG. 14, the user may request the first playback device 1300 to output a list of the second playback devices through various methods (S1425). Upon receiving the request, the first playback device 1300 may output a list of second playback devices (S1427). The user may select a second playback device from the second playback device list through the remote controller 1320 (S1429). Here, the first playback device 1300 may request related information of the second playback device 1310 from the second playback device 1310 (S1431). The related information of the second playback device 1310 may include at least one among device identification information copy prevention information, and profile information of the second playback device 1310. According to the request, the second playback device 1310 may transmit the related information of the second playback device to the first playback device 1300 (S1433).

On the basis of the related information of the second playback device 1310, the first playback device 1300 may determine whether the second playback device 1310 has been validly authenticated (S1435). When the second playback device 1310 has been validly authenticated according to the determination result, the second playback device 1310 may receive content from the first playback device 1300 in a streaming manner and play the same (S1437).

FIG. 13(c) illustrates controlling playing of content being played in the first playback device 1300 and/or the second playback device 1310 through the remote controller 1320. Here, the remote controller 1320 may be an example of an external interface, and playing of the content may also be controlled through any other user interface 9for example, a touchscreen, a voice, a gesture, and the like).

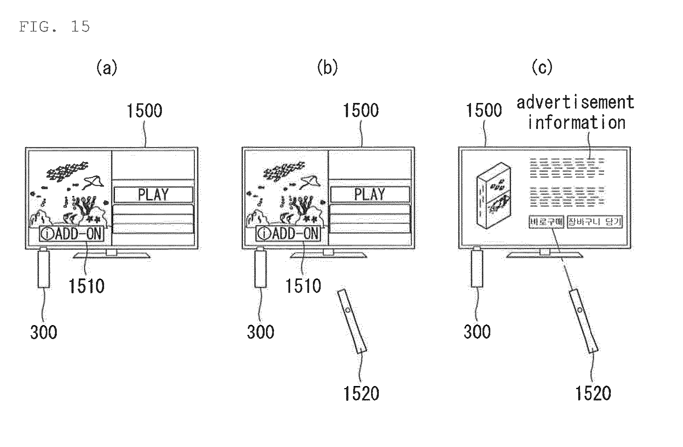

FIG. 15 is a view illustrating a process of outputting advertisement information while secure high definition content is being played, as an embodiment to which the present invention is applied.

Referring to FIGS. 15(a) through 15(c), a process of displaying advertisement information on a screen while a playback device 1500 is playing secure high definition content.

First, FIG. 15(a) illustrates that the playback device 1500 outputs an advertisement information icon together with content information, in a state in which the storage device 300 storing secure high definition content is plugged in to the playback device 1500.

FIG. 15(b) illustrates that an advertisement information icon is clicked by using a remote controller 1520, while the playback device 1500 is playing secure high definition content. Here, clicking of the advertisement information icon may be performed by touching a speed button on a screen of the playback device 1500 or by voice or gesture recognition.

FIG. 15(c) illustrates that, when the advertisement information icon is clicked, the playback device 1500 displays the advertisement information and the content is purchased therefrom. Here, the advertisement information may include meta data and connected to an external Internet side such as an online market according to input control of the remote controller 1520, and the user may purchase the corresponding content through the external Internet site.

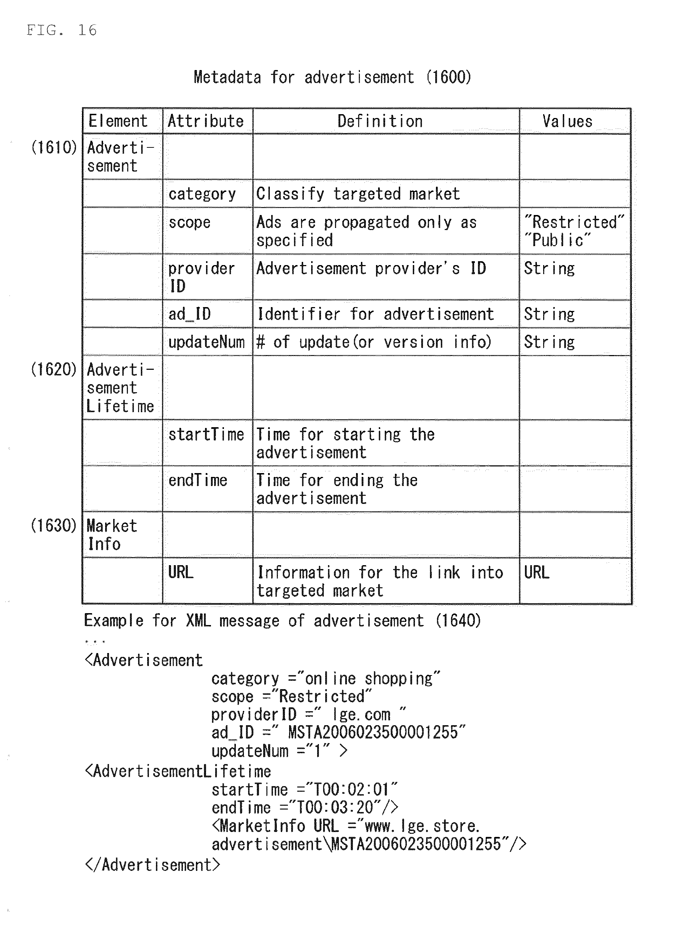

FIG. 16 is a view illustrating meta data included in advertisement information output while secure high definition content is being played, as an embodiment to which the present invention is applied.

Meta data 1600 for the advertisement information may include at least one among an advertisement element 1610, an advertisement time element 1620, and a market location element 1630.

The advertisement element 1610 may include at least one among category information classifying target markets, information of a range in which an advertisement is delivered, advertisement provider identification information, and version information.

The advertisement time element 1620 may include advertisement start time information and advertisement termination time information.

The market location element 1630 may include information regarding a target market link.

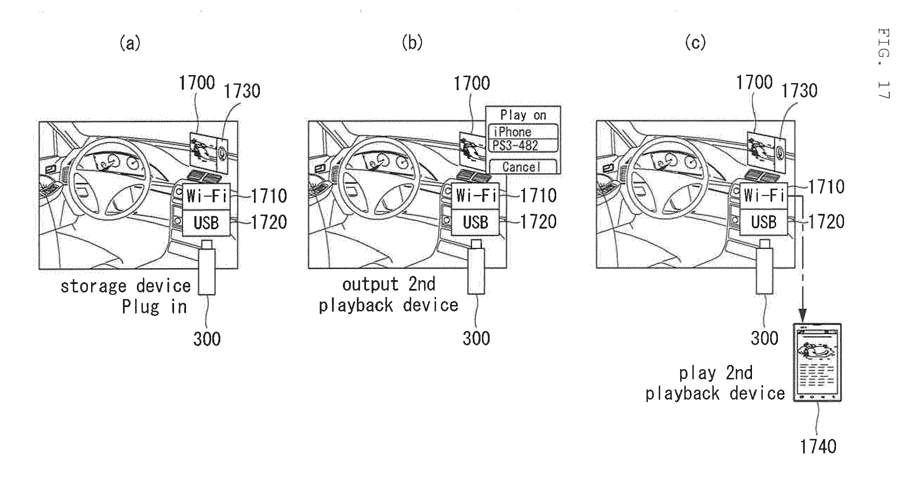

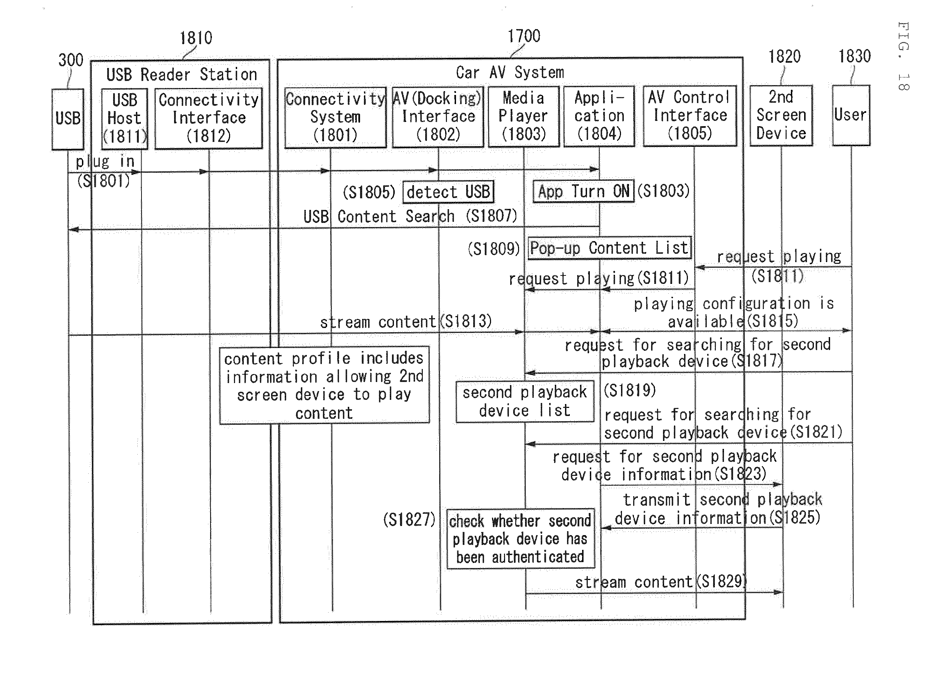

FIGS. 17 and 18 are flow charts illustrating a process of playing secure high definition content, which is being played in a vehicle AV system, by other player, as embodiments to which the present invention is applied.

Referring to FIGS. 17(a) through 17(c), a process of playing secure high definition content, which is being played in a car AV system, by a second playback device is illustrated.

First, FIG. 17(a) illustrates that a car AV system storing secure high definition content plays content through a playback device 1700 (hereinafter, referred to as a "first playback device"). Here, the user may control playing of the first playback device 1700 by using a user interface, for example, voice recognition 1730.

In this respect, referring to FIG. 18, first, when the storage device 300 is plugged in to the first playback device 1700 (S1801), power of the first playback device 1700 may be automatically turned on (S1803). After power of the first playback device 1700 is turned on, the first playback device 1700 may search for the plugged-in device and check the storage device 300 according to the search result (S1805).

The first playback device 1700 may search for content included in the storage device 300 (S1807), and displays list of searched content (S1809). When content to be played is selected from the list, the first playback device 1700 streams the selected content from the storage device 300 according to a play start request of the remote controller 1320 (S1811, S1813). Here, the user may set play information of the first playback device 1700 (S1815).

FIG. 17(b) illustrates that, while the first playback device 1700 is playing secure high definition content, when the user wants to play secure high definition content by other playback device (hereinafter, referred to as a "second playback device"), the first playback device 1700 is requested to output of a list of accessible second playback devices. Outputting of the list of the second playback devices may be performed by a user's voice command, may be performed by touching a speed button on a screen of the first playback device 1300, or may be automatically performed by a wireless communication connection configuration of the second playback device 1820.

In this respect, referring to FIG. 18, the user may request the first playback device 1700 to output a list of the second playback devices through various methods (S1817). Upon receiving the request, the first playback device 1700 may output a list of second playback devices 1820 (S1819). The user may select the second playback device 1820 from the second playback device list through the voice command or a screen touch (S1821).

Here, the first playback device 1700 may request related information of the second playback device 1820 from the second playback device 1820 (S1823). The related information of the second playback device 1820 may include at least one among device identification information copy prevention information, and profile information of the second playback device 1820. According to the request, the second playback device 1820 may transmit information related to the second playback device 1820 to the first playback device 1700 (S1825).

On the basis of the information related to the second playback device 1820, the first playback device 1300 may determine whether the second playback device 1820 is validly authenticated (S1827). When the second playback device 1820 is validly authenticated according to the determination result, the second playback device 1820 may receive content from the first playback device 1700 in a streaming manner and play the same (S1829).

FIG. 17(c) illustrates playing of content, which is being played in the first playback device 1700, by the second playback device 1820 through wireless communication (Wi-Fi).

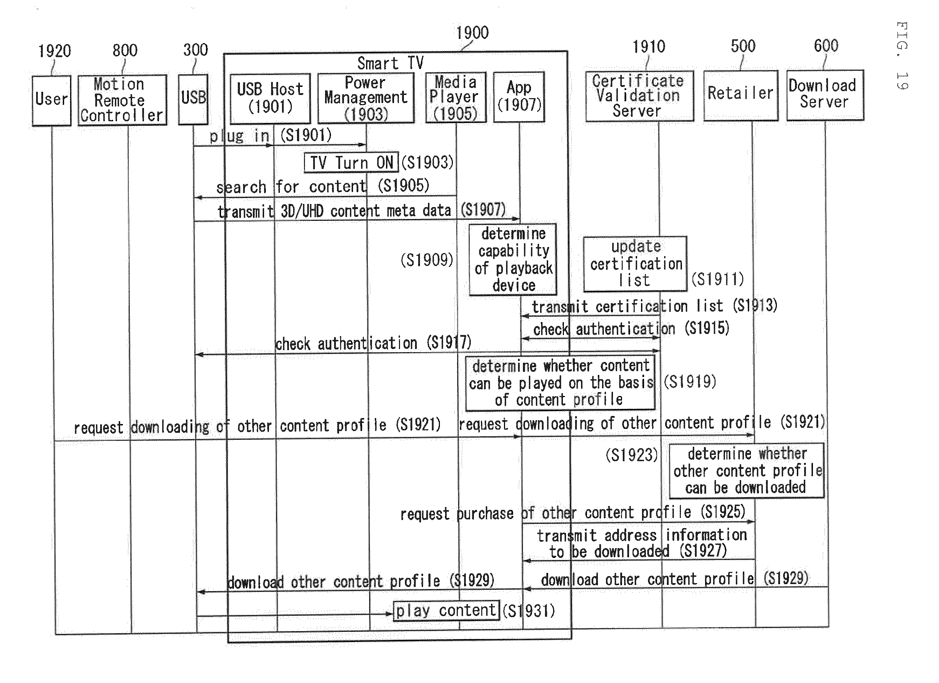

FIG. 19 is a flow chart illustrating a process of downloading other content profile when secure high definition content stored in a storage device cannot be played, as an embodiment to which the present invention is applied.

Referring to FIG. 19, when the storage device 300 is plugged in to a playback device 1900 (S1901), power of the playback device 1900 may be automatically turned on (S1903). After power of the playback device 1900 is turned on, the playback device 1900 may search for the plugged-in device and check the storage device 300 according to the search result.

The playback device 1900 may search for content included in the storage device 300 (S1905), and receive 3D/UHD content meta data from the storage device 300 (S1907).

On the basis of the received 3D/UHD content meta data, a specific application 1907 within the playback device 1900 may determine capability of the playback device 1900, that is, whether the playback device 1900 may be able to play the 3D/UHD content stored in the storage device 300.

Meanwhile, a certificate validation server 1910 may update a certification list (S1911). The latest certification list stored in the certificate validation server 1910 may be transmitted to the playback device 1900. A certification procedure for playing the 3D/UHD content may be performed through communication between the certificate validation server 1910 and the playback device 1900 and/or between the certificate validation server 1910 and the storage device 300 (S1915, S1917). In addition, it may be determined whether the playback device 1900 is eligible to play the 3D/UHD content on the basis of a content profile (S1919).

When it is determined that the playback device 1900 is eligible to play the 3D/UHD content on the basis of the certification procedure, a user 1920 may request downloading of a replaceable content profile from a retailer 500 through the playback device 1900 (S1921).

The retailer 500 may determine whether the replaceable content profile can be downloaded (S1923). When it is determined that the replaceable content profile can be downloaded, the user 1920 may request purchase of the replaceable content profile from the retailer through the playback device 1900 (S1925).

The retailer 500 may transmit address information from which the replaceable content profile can be downloaded, to the playback device 1900 (S1927). The playback device 190 may download the replaceable content profile from the download server 600 on the basis of the address information (S1929). The playback device 1900 may play the 3D/UHD content stored in the storage device on the basis of the replaceable content profile (S1931).

### [Industrial Applicability]

The preferred embodiments of the present invention are intended to be illustrative and may be improved, modified, substituted, or added to various other embodiments by a person skilled in the art within the scope of the technical concept defined in the claims.

## Claims

1. A method of playing a content stored in a storage device which is connectable, the method comprising:
detecting whether the storage device is connected;
receiving certification information from the detected storage device;
transmitting, to a server, the certification information;
receiving, from a server, an encrypted media file and a certification list based on the certification information, wherein the certification list is used for authenticating eligibility of at least one of a player, the storage device and the server;
storing the encrypted media file to the storage device and updating the certification list; and
playing the encrypted media file based on the updated certification list.

2. The method of claim 1, wherein the encrypted media file includes content level information, and the content level information represents categorized content attribute information.

3. The method of claim 1, wherein the certification list is updated by synchronizing the certification list with a previous certification list, and the previous certification list is pre-stored in the storage device.

4. The method of claim 1, wherein the certification list is stored in a security area of the storage device.

5. The method of claim 1, wherein the encrypted media file is played based on a specific application installed on the player.

6. A method of downloading a secure high-quality content, the method comprising:
receiving, from a player, a signal for requesting certification information of a storage device;
transmitting, to the player, the certification information of the storage device;
receiving, from a server, an encrypted media file and a certification list based on the certification information, wherein the certification list is used for authenticating eligibility of at least one of the player, the storage device and the server;
storing the encrypted media file to the storage device; and
updating the certification list.

7. The method of claim 6, wherein the encrypted media file includes content level information, and the content level information represents categorized content attribute information.

8. The method of claim 6, wherein the certification list is updated by synchronizing the certification list with a previous certification list, and the previous certification list is pre-stored in the storage device.

9. The method of claim 1, wherein the certification list is stored in a security area of the storage device.

10. The method of claim 1, wherein the encrypted media file is played based on a specific application installed on the player.

11. A device of playing a content stored in a storage device which is connectable, the device comprising:
a controller configured to
detect whether the storage device is connected,
receive certification information from the detected storage device,
transmit the certification information to a server,
receive an encrypted media file and a certification list from a server based on the certification information,
store the encrypted media file to the storage device, and
update the certification list;
a decoder configured to decode the encrypted media file based on the updated certification list; and
a display configured to output a decoded media file,
wherein the certification list is used for authenticating eligibility of at least one of a player, the storage device and the server.

12. The device of claim 11, wherein the encrypted media file includes content level information, and the content level information represents categorized content attribute information.

13. The device of claim 11, wherein the certification list is updated by synchronizing the certification list with a previous certification list, and the previous certification list is pre-stored in the storage device.

14. The device of claim 1, wherein the encrypted media file is played based on a specific application installed on the player.

15. A device of downloading a secure high-quality content, the device comprising:
a secure information management unit configured to
receive a signal for requesting certification information of a storage device from a player,
transmit the certification information of the storage device to the player,
receive an encrypted media file and a certification list from a server based on the certification information;
a data memory configured to store the encrypted media file; and
an updating unit configured to update the certification list,
wherein the certification list is used for authenticating eligibility of at least one of the player, the storage device and the server.

16. The device of claim 15, wherein the encrypted media file includes content level information, and the content level information represents categorized content attribute information.

17. The device of claim 15, wherein the certification list is updated by synchronizing the certification list with a previous certification list, and the previous certification list is pre-stored in the storage device.

18. The device of claim 15, wherein the encrypted media file is played based on a specific application installed on the player.

19. A car multimedia system of playing a content stored in a storage device which is connectable, the car multimedia system comprising:
a digital interface configured to detect whether the storage device is connected;
a AV system unit configured to
receive certification information from the detected storage device,
transmit the certification information to a server,
receive an encrypted media file and a certification list from a server based on the certification information,
store the encrypted media file to the storage device, and
update the certification list; and
a display unit configured to play the encrypted media file based on the updated certification list,
wherein the certification list is used for authenticating eligibility of at least one of a player, the storage device and the server.
